# EUROPEAN PATENT SPECIFICATION

(11) **EP 1 972 861 B1**
(45) Date of publication and mention of the grant of the patent: **09.10.2019**
(21) Application number: 07120690.8
(22) Date of filing: 14.11.2007
(51) Int. Cl.: F24F 11/77, F24F 11/70, F24F 140/12, F24F 3/06, F25B 49/02, F25B 13/00

(54) **Simultaneous Heating and Cooling Type Multi-Air Conditioner and Method for Controlling the Same**
Mehrzonenklimaanlage zum gleichzeitigen Heizen und Kühlen sowie Steuerverfahren dafür
Climatiseur multiple à chauffage et refroidissement simultané et son procédé de contrôle

(30) Priority: 23.03.2007 KR 20070028897
(43) Date of publication of application: 24.09.2008
(73) Proprietor: Samsung Electronics Co., Ltd., Suwon-si, Gyeonggi-do, 443-742 (KR)
(72) Inventor: Kim, Woo Hyun, Seoul (KR); Kim, Sung Goo, No. 106-1602, Gwanak-byeoksan-blueming Apt., Seoul (KR); Jung, Gyoo Ha, No. 541-1202, Baekseolmaeul-seongji Apt., Gyeonggi-do (KR)
(74) Representative: Grünecker Patent- und Rechtsanwälte PartG mbB

(56) References cited:
- EP-A1- 0 448 345
- EP-A1- 1 391 660
- EP-A1- 1 526 341
- EP-A2- 1 555 495

## Description

### BACKGROUND OF THE INVENTION

### 1. Field of the Invention

The present invention relates to a simultaneous heating and cooling type multi-air conditioner in which a single outdoor unit is connected with a plurality of indoor units to simultaneously heat and cool a plurality of indoor spaces, and, more particularly, to a simultaneous heating and cooling type multi-air conditioner, and a method for controlling the same, wherein a low-pressure control is carried out via the variation of a high-pressure to achieve desired heating and cooling capabilities of indoor units.

### 2. Description of the Related Art

In general, a simultaneous heating and cooling multi-air conditioner is configured such that a single outdoor unit, which includes a compressor, an outdoor heat exchanger, an outdoor fan, and an outdoor electronic expansion valve (EEV), is connected with a heating and cooling switching unit having a plurality of heating and cooling on-off valves, to assure simultaneous heating and cooling operations of a plurality of indoor units. Pipes to connect the outdoor unit with the plurality of indoor units include a high-pressure gas pipe for a heating operation in a primary cooling operation mode, and a low-pressure gas pipe and a liquid pipe for a cooling operation.

In the above described simultaneous heating and cooling multi-air conditioner, the plurality of on-off valves of the heating and cooling switching unit are selectively opened or closed to regulate the introduction or discharge of a refrigerant into or from the respective indoor units. Thereby, the simultaneous heating and cooling multi-air conditioner is able to carry out a full-room heating operation in which all the indoor units perform a heating operation, a full-room cooling operation in which all the indoor units perform a cooling operation, a primary cooling operation in which the capacity of indoor units performing a cooling operation is greater than the capacity of indoor units performing a heating operation, and a primary heating operation in which the capacity of indoor units performing a heating operation is greater than the capacity of indoor units performing a cooling operation.

In a heating operation, a refrigerant, having passed through an outdoor unit, first passes heating on-off valves through the high-pressure gas pipe, and then, is introduced into indoor heat exchangers of indoor units. Subsequently, after passing EEVs of the indoor units, the refrigerant is again introduced into the outdoor unit through a liquid pipe, to complete a refrigeration cycle.

On the other hand, in a cooling operation, a refrigerant, having passed through an outdoor unit, first passes EEVs of indoor units through a liquid pipe, and then, is introduced into the indoor units. Subsequently, after passing cooling on-off valves, the refrigerant is again introduced into the outdoor unit through a low-pressure gas pipe, to complete a refrigeration cycle.

Also, in a primary cooling operation, valves of a high-pressure gas pipe connected to cooling indoor units performing a cooling operation are closed by a heating and cooling switching unit, and simultaneously, valves of a low-pressure gas pipe connected to the cooling indoor units are opened. Conversely, in a primary heating operation, valves of a high-pressure gas pipe connected to heating indoor units having a heating operation are opened, and simultaneously, valves of a low-pressure gas pipe connected to the heating indoor units are closed.

In the case of the above described primary cooling operation, however, when an outdoor fan is turned on, a condensation temperature is lowered depending on a lowered condensation pressure, resulting in a deterioration in heating capability. When the outdoor fan is turned off, although the heating capability is improved by a raised condensation pressure, the condensation pressure may exceed a control point. That is, a high pressure has a large variation depending on the On-Off of the outdoor fan, and this deteriorates the reliability of a system and makes it difficult to achieve desired heating and cooling capabilities of indoor units. Furthermore, even when heating indoor units have a low operation capacity, a low pressure has a large variation, thus causing an unstable compressor capacity. Therefore, it is difficult to achieve the reliability of a system and desired heating and cooling capabilities of indoor units, resulting in the user's dissatisfaction.

EP 1,526,341 A1 discloses a multi-air conditioner and a method for controlling same. The multi-air conditioner comprises an outer unit and a plurality of indoor units connected to the outdoor unit. Such outdoor unit has a compressor and an outdoor fan. A refrigerant switching unit is provided between the outdoor unit and before indoor unit. There is a kind of primary cooling operation and it also seems to be possible that corresponding capacity or total operational load of the indoor units performed in a cleaning operation is greater than the corresponding capacity of the indoor units performing a heating operation. Corresponding compressors are driven and further, an output refrigerant pressure of the compressors is sensed, wherein this sensing can result in different operations of the outdoor fan.

### SUMMARY OF THE INVENTION

It is an object of the invention to provide a simultaneous heating and cooling type multi-air conditioner, and a method for controlling the same, wherein a compensation control is carried out depending on a variable evaporation pressure after capacities of a compressor and an outdoor fan are fixed at predetermined values on the basis of a condensation pressure, thereby achieving desired heating and cooling capabilities of indoor units.

Additional aspects and/or advantages of the invention will be set forth in part in the description which follows and, in part, will be obvious from the description, or may be learned by practice of the invention.

The object is solved by the features of the independent claims.

Advantageous embodiments are disclosed by the subclaims.

In the primary cooling operation, the capacity of the indoor units performing a cooling operation may be greater than the capacity of the indoor units performing a heating operation.

The determination of the control capacity of the outdoor fan may be to control the outdoor fan such that a control capacity variable of the outdoor fan varies **by a minimum capacity variation** according to the average condensation pressure value for the predetermined time.

The variable control of the capacity of the compressor may be to control the compressor such that the capacity of the compressor is increased by a minimum capacity variation according to the average condensation pressure value for the predetermined time.

The variable control of the capacity of the compressor may be to increase the capacity of the compressor by determining a maximum compressor capacity without a reduction in the capacity of the compressor.

The controller may vary a control capacity variable of the outdoor fan by a minimum capacity variation according to the average condensation pressure value for the predetermined time, so as to prevent an instantaneous change of the condensation pressure.

The controller may increase the capacity of the compressor by a minimum capacity variation according to the average evaporation pressure value for the predetermined time, so as to prevent an instantaneous change of the evaporation pressure.

The controller may determine a maximum compressor capacity without a reduction in the capacity of the compressor, so as to increase the capacity of the compressor.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a circuit diagram showing a refrigeration cycle of a simultaneous heating and cooling type multi-air conditioner in accordance with the present invention;
FIG. 2 is a circuit diagram of the refrigeration cycle shown in FIG. 1, showing a primary cooling operation;
FIG. 3 is a control diagram of the simultaneous heating and cooling type multi-air conditioner in accordance with an exemplary embodiment of the present invention; and
FIG. 4 is a flow chart showing a method for controlling the simultaneous heating and cooling type multi-air conditioner in accordance with the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures.

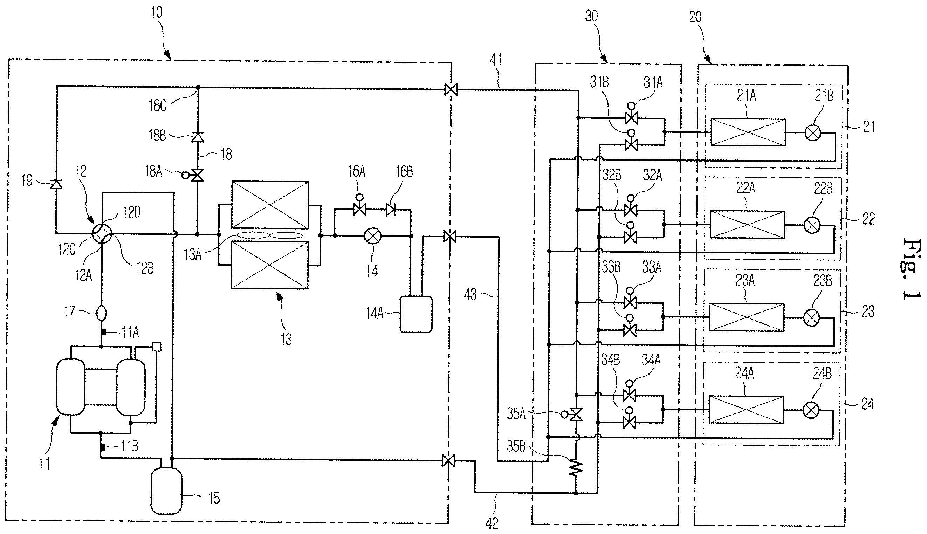

FIG. 1 is a circuit diagram showing a refrigeration cycle of a simultaneous heating and cooling type multi-air conditioner in accordance with the present invention.

In FIG. 1, the simultaneous heating and cooling type multi-air conditioner of the present invention includes a single outdoor unit 10, and a plurality of indoor units 20; 21, 22, 23, and 24 connected parallel to the outdoor unit 10. A heating and cooling switching unit 30 is connected between the outdoor unit 10 and the indoor units 20, to switch an operation mode of the respective indoor units 21, 22, 23, and 24 to a cooling operation or heating operation.

The outdoor unit 10 includes a compressor 11 to discharge a high-temperature and high-pressure gas-phase refrigerant by compressing a low-temperature and low-pressure gas-phase refrigerant, a 4-way valve 12 to be switched on or off so as to change the flow of the refrigerant discharged from the compressor 11 according to an operation mode (cooling operation or heating operation), at least one outdoor heat exchanger 13, an outdoor fan 13A serving as a catalyst to facilitate a heat-exchange between the refrigerant flowing in the outdoor heat exchanger 13 and air so as to improve a heat-exchange capability of the outdoor unit 10, an electronic expansion valve 14 (hereinafter, referred to as outdoor EEV) to expand the refrigerant while regulating the flow rate of the refrigerant, a receiver tank 14A to separate the gas-phase refrigerant and the liquid-phase refrigerant from each other, and an accumulator 15.

A condensation-pressure sensor 11A is installed at a discharge side of the compressor 11 to detect a condensation pressure (high pressure), and an evaporation-pressure sensor 11B is installed at a suction side of the compressor 11 to detect an evaporation pressure (low pressure).

The plurality of indoor units 20 (in the present invention, for example, four indoor units) include indoor electronic expansion valves 21B, 22B, 23B, and 24B (hereinafter, referred to as indoor EEVs) connected in series to indoor heat exchangers 21A, 22A, 23A, and 24A, respectively. The plurality of indoor units 21, 22, 23, and 24 are connected to a high-pressure gas pipe 41, a low-pressure gas pipe 42, and a liquid pipe 43 through the heating and cooling switching unit 30 provided between the outdoor unit 10 and the indoor units 21, 22, 23, and 24.

Here, the high-pressure gas pipe 41, the low-pressure gas pipe 42, and the liquid pipe 43 can be diverged in the heating and cooling switching unit 30. Branches of the diverged liquid pipe 43 are connected to the indoor EEVs 21B, 22B, 23B, and 24B, respectively. The heating and cooling switching unit 30 includes switching valves, for example, heating valves 31A, 32A, 33A, and 34A and cooling valves 31B, 32B, 33B, and 34B. The high-pressure gas pipe 41 and the low-pressure gas pipe 42 are connected to the indoor heat exchangers 21A, 22A, 23A, and 24A of the indoor units 21, 22, 23, and 24 through the heating valves 31A, 32A, 33A, and 34A and the cooling valves 31B, 32B, 33B, and 34B. Specifically, the heating valves 31A, 32A, 33A, and 34A have inlets connected to the high-pressure gas pipe 41, and outlets connected to the indoor heat exchangers 21A, 22A, 23A, and 24A of the indoor units 21, 22, 23, and 24, respectively. The cooling valves 31B, 32B, 33B, and 34B have inlets connected to the indoor heat exchangers 21A, 22A, 23A, and 24A of the indoor units 21, 22, 23, and 24, respectively, and outlets connected to the low-pressure gas pipe 42.

The high-pressure gas pipe 41 and the low-pressure gas pipe 42 are connectable to each other through an electronic valve 35A and a capillary tube 35B.

Meanwhile, in the interior of the outdoor unit 10, the low-pressure gas pipe 42 is connected to the suction side of the compressor 11 via the accumulator 15, the outdoor heat exchanger 13 and the outdoor EEV 14 are connected to each other in series, and the liquid pipe 43 is connected to the outdoor EEV 14 via the receiver tank 14A.

In the present invention, the at least one outdoor heat exchanger 13 includes a plurality of heat exchangers (for example, two heat exchangers as shown in the drawing) connected parallel to each other. An electronic valve 16A as a flow-rate regulating valve is connected, together with a check valve 16B, parallel to the outdoor EEV 14 between the outdoor heat exchanger 13 and the liquid pipe 43. During a cooling operation, a liquid-phase refrigerant, discharged from the outdoor heat exchanger 13, passes through the electronic valve 16A and the check valve 16B in sequence while bypassing the outdoor EEV 14. Also, during a heating operation, the refrigerant passes through the outdoor EEV 14.

The 4-way valve 12 of the outdoor unit 10 includes a first port 12A connected to the discharge side of the compressor 11 via an oil separator 17, a second port 12B connected to the liquid pipe 43 via the outdoor heat exchanger 13 and the outdoor EEV 14, a third port 12C connected to the high-pressure gas pipe 41, and a fourth port 12D connected to the low-pressure gas pipe 42 and the accumulator 15.

A high-pressure branch pipe 18 diverged from the high-pressure gas pipe 41 is connected between the second port 12B and the outdoor heat exchanger 13. The high-pressure branch pipe 18 is provided with an electronic valve 18A as an on-off valve, together with a check valve 18B to prevent backflow of the refrigerant from the high-pressure gas pipe 41. Another check valve 19 is provided between the third port 12C and a connecting point 18C of the high-pressure gas pipe 41 and the high-pressure branch pipe 18, to prevent backflow of the refrigerant from the high-pressure gas pipe 41.

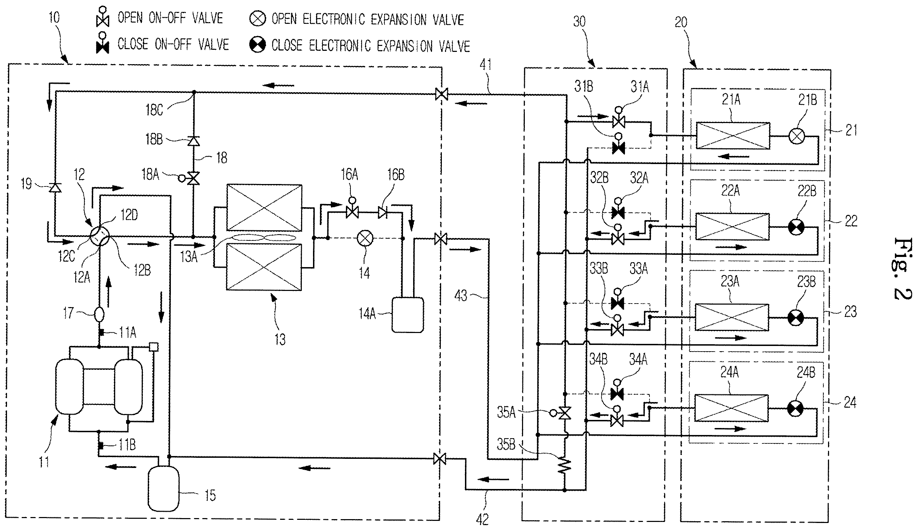

FIG. 2 is a circuit diagram of the refrigeration cycle shown in FIG. 1, showing a primary cooling operation. Now, the primary cooling operation, in which lower three indoor units 22, 23, and 24 perform a cooling operation, and the uppermost single indoor unit 21 performs a heating operation, will be described.

In the primary cooling operation, the first port 12A and the second port 12B of the 4-way valve 12 are connected to each other, and the third port 12C and the fourth port 12D of the 4-way valve 12 are connected to each other. Simultaneously, the electronic valve 18A of the high-pressure branch pipe 18 is opened.

In the cooling indoor units 22, 23 and 24 performing a cooling operation, the heating valves 32A, 33A, and 34A of the heating and cooling switching unit 30 connected to the high-pressure gas pipe 41 are closed, and simultaneously, the cooling valves 32B, 33B, and 34B connected to the low-pressure gas pipe 42 are opened. Conversely, in the heating indoor unit 21 performing a heating operation, the heating valve 31A connected to the high-pressure gas pipe 41 is opened and simultaneously, the cooling valve 31B connected to the low-pressure gas pipe 42 is closed.

In the above described primary cooling operation, as represented by arrows of FIG. 2, the refrigerant, discharged from the compressor 11, is fed into the outdoor heat exchanger 13 through the first and second ports 12A and 12B of the 4-way valve 12, so as to be condensed in the outdoor heat exchanger 13. Thereafter, the condensed refrigerant is delivered into the liquid pipe 43 through the electronic valve 16A and the check valve 16B.

In this case, the refrigerant, delivered into the liquid pipe 43, is fed into the indoor heat exchangers 22A, 23A, and 24A through the indoor EEVs 22B, 23B, and 24B. As the refrigerant is evaporated in the indoor heat exchangers 22A, 23A, and 24A, the cooling of indoor rooms is carried out. The refrigerant, used to cool the indoor rooms, is delivered into the low-pressure gas pipe 42 through the cooling valves 32B, 33B, and 34B of the heating and cooling switching unit 30.

A part of the refrigerant delivered into the low-pressure gas pipe 42, passes the electronic valve 35A and the capillary tube 35B, so as to be fed into the heating indoor unit 21 through the heating valve 31A of the heating and cooling switching unit 30. As the refrigerant is condensed in the indoor heat exchanger 21A, the heating of an indoor room is carried out. The remaining refrigerant delivered into the low-pressure gas pipe 42, can be circulated to the suction side of the compressor 11 by passing through the accumulator 15. Also, the refrigerant, delivered into the liquid pipe 43, is returned to the outdoor unit 10, so as to be circulated to the compressor 11 by passing through the third and fourth ports 12C and 12D of the 4-way valve 12, together with the refrigerant delivered from the low-pressure gas pipe 42 through the accumulator 15.

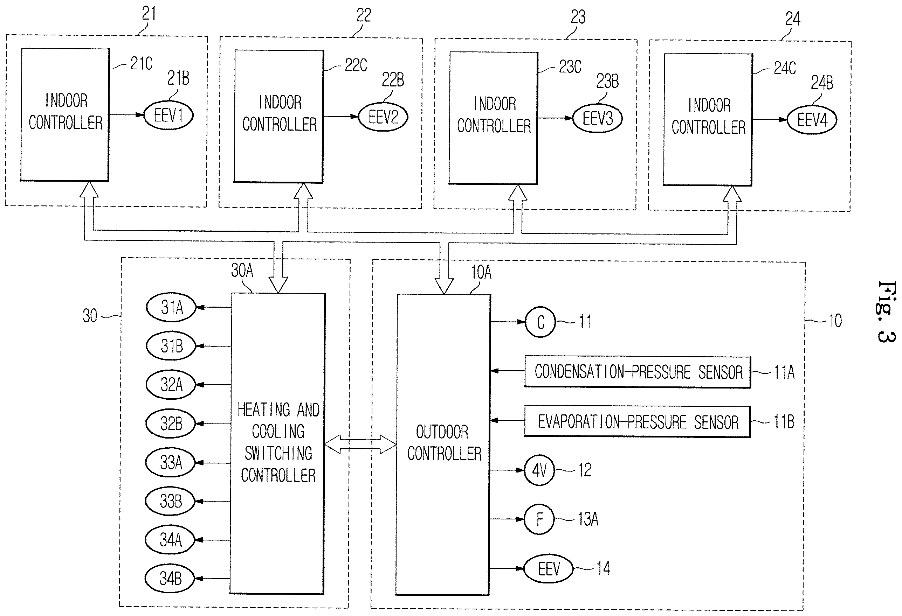

FIG. 3 is a control diagram of the simultaneous heating and cooling type multi-air conditioner in accordance with an exemplary embodiment of the present invention.

In FIG. 3, the outdoor unit 10 includes a micro-computer and a peripheral circuit thereof, and further includes an outdoor controller 10A to carry out the overall control of the outdoor unit 10.

If a heating or cooling operation start command is inputted from the respective indoor units 21, 22, 23, and 24, the refrigerant discharged from the compressor 11 is delivered into the outdoor heat exchanger 13 or the indoor heat exchangers 21A, 22A, 23A, and 24A of the respective indoor units 21, 22, 23, and 24 via the 4-way valve 12 under a control by the outdoor controller 10A, so as to perform a cooling or heating operation.

Also, the outdoor fan 13A is controlled, by the outdoor controller 10A, to keep a predetermined step value (i.e. revolutions per minute) by a predetermined time interval during a primary cooling operation. Thereby, if the outdoor fan 13A is operated at the predetermined step value for a predetermined time, the outdoor controller 10A carries out a compensation control. **A high pressure of the compensation control is controlled as represented in the following Table 1 on the basis of a final condensation pressure value checked by the condensation-pressure sensor 11A for 2 minutes.** For example, under an assumption that the outdoor fan 13A is in an Off state after an initial starting operation thereof, if the high pressure has a value of 29kg/cm²G in a state in which the outdoor fan 13A is operated at a step value of 1 for 2 minutes on the basis of the Table 1 showing the range of the condensation pressure, the outdoor fan 13A is operated for 2 minutes at a step value of 2 (calculated by adding a step value of 1 to the present step value of 1) on the basis of the following Table 2. Then, if a final pressure after the lapse of 2 minutes is 27kg/cm²G, the outdoor fan 13A keeps the present step value of 2 on the basis of the Table 2, to achieve desired heating and cooling capabilities. When the operation mode of the outdoor unit 10 is changed or a heating rate is changed, the compensation control is released, and a previous normal control is carried out.

**Table 1 Initial Capacity**

| Pressure | Fan Step |
|---|---|
| High-pressure < 28 | 0 |
| 28 ≤ High-pressure < 30 | 1 |
| 30 ≤ High-pressure < 32 | 2 |
| 32 ≤ High-pressure < 33 | 3 |
| 33 ≤ High-pressure < 34 | 4 |
| 34 ≤ High-pressure | Highest Step |

**Table 2 Control Capacity**

| Pressure | Fan Step |
|---|---|
| High-pressure ≤ 25 | Present Fan Step - 1 |
| 25 < High-pressure ≤ 28 | Keep Present Fan Step |
| 28 < High-pressure | Present Fan Step + 1 |

During the primary cooling operation, the outdoor controller 10A initially carries out a normal control of the compressor 11 on the basis of an initial control capacity (heating and cooling capacities). Then, if the outdoor fan 13A enters the compensation control, the outdoor controller 10A finishes the normal control and begins the compensation control. Specifically, if the outdoor fan 13A enters the above described compensation control, on the basis of an evaporation pressure checked by the evaporation-pressure sensor 11B after the capacity of the compressor 11 is fixed at a predetermined value obtained by adding a predetermined capacity to the present capacity, the capacity of the compressor 11 is increased up to a maximum value determined depending on the initial control capacity without a reduction in the capacity of the compressor 11. When the operation mode of the outdoor unit 10 is changed or the heating rate is changed, the compensation control is released and the previous normal control is carried out.

Each of the indoor units 21, 22, 23, and 24 includes a micro-computer and a peripheral circuit thereof, and further includes an indoor controller 21D, 22D, 23D, or 24D to carry out the overall control thereof. The heating and cooling switching unit 30 includes a micro-computer and a peripheral circuit thereof, and further includes a heating and cooling switching controller 30A to carry out the overall control of the heating and cooling switching unit 30.

Hereinafter, the operation and effects of the simultaneous heating and cooling type multi-air conditioner having the above described configuration, and the control method thereof will be described.

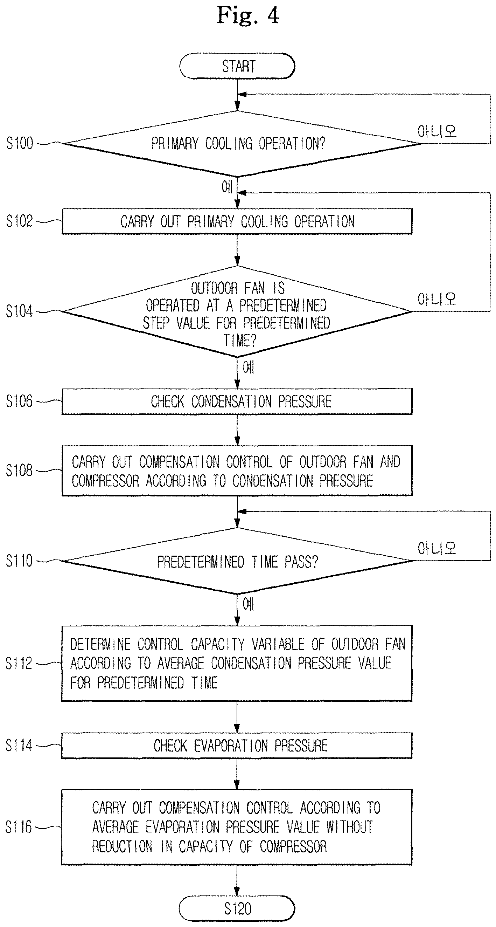

FIG. 4 is a flow chart showing the method for controlling the simultaneous heating and cooling type multi-air conditioner in accordance with the present invention.

In the multi-air conditioner to simultaneously heat and cool a plurality of indoor spaces by connecting the plurality of indoor units 21, 22, 23, and 24 to the single outdoor unit 10, it is controlled to achieve desired heating and cooling capabilities of the indoor units in a primary cooling operation in which the capacity of indoor units performing a cooling operation is greater than the capacity of indoor units performing a heating operation.

First, the outdoor controller 10A determines whether or not a primary cooling operation is inputted to the simultaneous heating and cooling type multi-air conditioner (S100). If the primary cooling operation is inputted, the outdoor controller 10A controls the compressor 11 and various valves to set the refrigeration cycle as shown in FIG. 2.

The outdoor controller 10A also controls the capacity of the compressor 11 and the air flow of the outdoor fan 13A on the basis of the initial control capacity, to carry out the primary cooling operation as shown in FIG. 2 (S102).

In the primary cooling operation, the outdoor fan 13A is controlled to keep a predetermined step value by a predetermined time interval, and it is determined whether or not the outdoor fan 13A is operated at a predetermined step value (including a suspension step value) for a predetermined time (S104). If the outdoor fan 13A is operated at the predetermined step for the predetermined time, a condensation pressure is checked by the condensation-pressure sensor 11A (S106), to carry out the compensation control of the outdoor fan 13A and the compressor 11 on the basis of the condensation pressure (S108). A high pressure of the compensation control is controlled as represented in the following Table 1 on the basis of a final condensation pressure value checked by the condensation-pressure sensor 11A for 2 minutes. Thereby, once the air flow of the outdoor fan 13A is fixed at a predetermined value on the basis of the condensation pressure, desired heating and cooling capabilities can be accomplished by regulating the air flow of the outdoor fan 13A.

Also, since an evaporation pressure has a large variation according to the variation of the condensation pressure, the capacity of the compressor 11 is fixed at a predetermined value obtained by adding a predetermined capacity to the present capacity.

It is determined whether or not a predetermined time (approximately 2 minutes) passes after the control of the outdoor fan 13A (S110). If the predetermined time passes, a control capacity variable of the outdoor fan 13A is determined according to an average condensation pressure value for a predetermined time (S112).

For example, under an assumption that the outdoor fan 13A is in an Off state after an initial starting operation thereof, if the high pressure has a value of 29kg/cm²G in a state in which the outdoor fan 13A is operated at a step value of 1 for 2 minutes on the basis of the Table 1 showing the range of the condensation pressure, the outdoor fan 13A is operated for 2 minutes at a step value of 2 (calculated by adding a step value of 1 to the present step value of 1) on the basis of the Table 2. Then, if a final pressure after the lapse of 2 minutes is 27kg/cm²G, the outdoor fan 13A keeps the present step value of 2 on the basis of the Table 2.

After completing the above described control procedure, an evaporation pressure is checked by the evaporation-pressure sensor 11B (S114), and the capacity of the compressor 11 is controlled according to an average evaporation pressure value for a predetermined time without a reduction in the capacity of the compressor 11 (S116). In this case, the capacity of the compressor 11 is increased up to a maximum value determined according to the initial control capacity.

After completing the starting operation safely, at a time point when the step value of the outdoor fan 13A is changed from 0 to 1 in a state in which the compressor 11 is operated at a step value of 25 under a low pressure control, the capacity of the compressor 11 is changed to a value of 28 obtained by adding a value of 3 to the present step value of 25, and the control of the evaporation pressure is carried out. In this case, if the capacity of the compressor 11 has to be increased by the control of the evaporation pressure, the capacity of the compressor 11 has a value of 29 obtained by adding a value of 1 to the present value of 28. Conversely, if the capacity of the compressor 11 has to be decreased, the capacity of the compressor 1 is kept to have the variation of zero, and the maximum capacity of the compressor 11 is limited to a value of 30 obtained by adding a value of 10 to the present value of 25 by the control of the evaporation pressure. In the above described operation, the control of the compressor 11 is released when the operation mode of the outdoor unit 10 is changed or the heating rate is changed.

As apparent from the above description, with the simultaneous heating and cooling type multi-air conditioner and the method for controlling the same according to the present invention, a high pressure has a large variation according to the On-Off of the outdoor fan. Therefore, a control for achieving desired heating and cooling capabilities is carried out in a state in which the capacity of the outdoor fan is fixed at a predetermined value, and a control capacity variable of the outdoor fan is determined on the basis of an average condensation pressure value for a predetermined time. This eliminates the problem of a rapid change in operation pressure, resulting in an improvement in the reliability of a system.

Further, in a primary cooling operation in which the capacity of heating indoor unit(s) is low, a low pressure has a large variation. Therefore, a control for achieving desired heating and cooling capabilities is carried out, via an accurate control, in a state in which the capacity of the compressor is fixed at a predetermined value and is changed within a smaller range than that of the prior art. Also, to achieve the desired heating and cooling capabilities, the capacity of the compressor is controlled to be increased by a minimum capacity variation according to an average evaporation pressure value for a predetermined time. This also has the effect of improving the reliability of a system.

Furthermore, when the control of the compressor begins according to the condensation pressure, a maximum compressor capacity is determined according to an initial control capacity, resulting in the high reliability of a system.

Although embodiments of the present invention have been shown and described, it would be appreciated by those skilled in the art that changes may be made in this embodiment without departing from the principles of the invention, the scope of which is defined in the claims.

## Claims

1. A method for controlling a simultaneous heating and cooling type multi-air conditioner comprising: an outdoor unit (10) having a compressor (11); a plurality of indoor units (21, 22, 23, 24) connected to the outdoor unit (10); and a heating and cooling switching unit (30) corresponding to the respective indoor units, to enable simultaneous heating and cooling operations of the plurality of indoor units, the method comprising:
determining (S100) whether or not a primary cooling operation is selected;
if the primary cooling operation is selected (S102), increasing (S104, S106, S108) the capacity of the compressor by adding a predetermined capacity to a compressor operation capacity; and
controlling (S110, S114, S116) the capacity of the compressor (11) in a variable manner according to an average value of an evaporation pressure varying for a predetermined time.

2. The method according to claim 1, wherein the variable control of the capacity of the compressor is to control the compressor such that the capacity of the compressor is increased by a minimum capacity variation according to the average evaporation pressure value for the predetermined time.

3. The method according to claim 1, wherein
the variable control of the capacity of the compressor is to increase the capacity of the compressor by determining a maximum compressor capacity without a reduction in the capacity of the compressor.

4. The method according to claim 1, wherein, in the primary cooling operation, the capacity of the indoor units performing a cooling operation is greater than the capacity of the indoor units performing a heating operation.

5. A simultaneous heating and cooling type multi-air conditioner comprising:
an outdoor unit (10) having a compressor (11) and an outdoor fan (13A);
a plurality of indoor units (21, 22, 23, 24) connected to the outdoor unit;
a heating and cooling switching unit (30) corresponding to the respective indoor units; and
a controller (10A) configured to determine whether or not a primary cooling operation is selected, in which the capacity of the indoor units (21) performing a cooling operation is greater than the capacity of the indoor units (22, 23, 24) performing a heating operation, and if the primary cooling operation is selected, the controller operating the outdoor fan (13A) for a predetermined time in a state in which the air flow of the outdoor fan is fixed at a predetermined capacity depending on a condensation pressure, and determining a control capacity of the outdoor fan on the basis of an average condensation pressure value for the predetermined time; **characterised in that**
in the primary cooling operation, the controller (10A) is configured to increase the capacity of the compressor (13A) by adding a predetermined capacity to a compressor operation capacity, and control the capacity of the compressor in a variable manner according to an average value of an evaporation pressure varying for a predetermined time.

6. The multi-air conditioner according to claim 5, wherein the controller (10A) varies a control capacity variable of the outdoor fan (13A) by a minimum capacity variation according to the average condensation pressure value for the predetermined time, so as to prevent an instantaneous change of the condensation pressure.

7. The multi-air conditioner according to claim 5, wherein the controller (10A) increases the capacity of the compressor (13A) by a minimum capacity variation according to the average evaporation pressure value for the predetermined time, so as to prevent an instantaneous change of the evaporation pressure.

8. The multi-air conditioner according to claim 5, wherein
the controller (10A) determines a maximum compressor capacity without a reduction in the capacity of the compressor, so as to increase the capacity of the compressor.

## Patentansprüche

1. Steuerverfahren zum gleichzeitigen Heizen und Kühlen mittels einer Mehrzonenklimaanlage, welche aufweist:
eine Außenbereichseinheit (10) mit einem Kompressor (11),
eine Vielzahl von Innenbereichseinheiten (21, 22, 23, 24) in Verbindung mit der Außenbereichseinheit (10), und
eine Heiz- und Kühlschalteinheit (30) entsprechend zu den verschiedenen Innenbereichseinheiten zum Ermöglichen eines gleichzeitigen Heizens und Kühlens der Vielzahl von Innenbereichseinheiten, wobei das Verfahren aufweist:
Bestimmen (S100), ob eine primäre Kühltätigkeit ausgewählt wurde;
Erhöhen (S104, S106, S108) der Kapazität des Kompressors durch Addieren einer vorbestimmten Kapazität zu der Kompressortätigkeitskapazität, falls die primäre Kühltätigkeit ausgewählt wurde (S102), und
Steuern (S110, S114, S116) der Kapazität des Kompressors (11) in einer variablen Weise gemäß eines Mittelwertes eines für eine vorbestimmte Zeit variierenden Verdampfungsdrucks.

2. Verfahren nach Anspruch 1, wobei die variable Steuerung der Kapazität des Kompressors in der Weise zur Steuerung des Kompressors dient, dass die Kapazität des Kompressors um eine minimale Kapazitätsvariation gemäß dem mittleren Verdampfungsdruckwert über eine vorbestimmte Zeit erhöht wird.

3. Verfahren nach Anspruch 1, wobei die variable Steuerung der Kapazität des Kompressors zum Erhöhen der Kapazität des Kompressors durch Bestimmen einer maximalen Kompressorkapazität ohne eine Reduktion in der Kapazität des Kompressors erfolgt.

4. Verfahren nach Anspruch 1, wobei während der primären Kühltätigkeit die Kapazität der Innenbereichseinheiten, welche eine Kühltätigkeit durchführen, größer ist als die Kapazität der Innenbereichseinheiten, die eine Heiztätigkeit durchführen.

5. Mehrzonen-Klimaanlage zum gleichzeitigen Heizen und Kühlen, welche aufweist:
eine Außenbereichseinheit (10) mit einem Kompressor (11) und einem Außenbereichsventilator (13A);
eine Vielzahl von Innenbereichseinheiten (21, 22, 23, 24) in Verbindung mit der Außenbereichseinheit;
eine Heiz- und Kühlschalteinheit (30) entsprechend zu den verschiedenen Innenbereichseinheiten, und
eine Steuerung (10A), ausgebildet zur Bestimmung, ob eine primäre Kühltätigkeit ausgewählt wurde, in der die Kapazität der Innenbereichseinheiten (21), die eine Kühltätigkeit durchführt, größer als die Kapazität der Innbereichseinheiten (22, 23, 24) ist, die eine Heiztätigkeit durchführen, und, falls die primäre Kühltätigkeit ausgewählt wurde, die Steuerung den Außenbereichsventilator (13A) für eine vorbestimmte Zeit in einem Zustand betätigt, in dem der Luftfluss des Außenbereichsventilators in Abhängigkeit von einem Kondensationsdruck auf einer vorbestimmten Kapazität fixiert ist, und zum Bestimmen einer Kontrollkapazität des Außenbereichsventilators auf der Basis eines mittleren Kondensationsdruckwertes für eine vorbestimmte Zeit,
**dadurch gekennzeichnet, dass**
während der primären Kühltätigkeit die Steuerung (10A) ausgebildet ist zum Erhöhen der Kapazität des Kompressors (13A) durch Addieren einer vorbestimmten Kapazität zur Kompressorbetätigungskapazität und zur Steuerung der Kapazität des Kompressors in variabler Weise entsprechend zu einem Mittelwert eines für eine vorbestimmte Zeit hinweg variierenden Verdampfungsdrucks.

6. Mehrzonen-Klimaanlage nach Anspruch 5, wobei die Steuerung (10A) eine Steuerungskapazitätsvariable des Außenbereichsventilators (13A) um eine minimale Kapazitätsänderung entsprechend dem mittleren Kondensationsdruckwert für eine vorbestimmte Zeit variiert, um eine augenblickliche Änderung des Kondensationsdrucks zu verhindern.

7. Mehrzonen-Klimaanlage nach Anspruch 5, wobei die Steuerung (10A) die Kapazität des Kompressors (13A) um eine minimale Kapazitätsvariation entsprechend dem mittleren Verdampfungsdruckwert für eine vorbestimmte Zeit erhöht, um eine augenblickliche Änderung des Verdampfungsdrucks zu verhindern.

8. Mehrzonen-Klimaanlage nach Anspruch 5 wobei die Steuerung (10A) eine maximale Kompressorkapazität bestimmt, ohne eine Reduktion der Kapazität des Kompressors, um die Kapazität des Kompressors zu erhöhen.

## Revendications

1. Procédé de commande d'un climatiseur multiple à chauffage et refroidissement simultanés comprenant: une unité extérieure (10) ayant un compresseur (11); une pluralité d'unités intérieures (21, 22, 23, 24) connectées à l'unité extérieure (10); et une unité de commutation chauffage et refroidissement (30) correspondant aux unités intérieures respectives, pour permettre des opérations simultanées de chauffage et refroidissement de la pluralité des unités intérieures, le procédé comprenant les opérations suivantes:
déterminer (S100) si une opération de refroidissement primaire est sélectionnée ou non;
si l'opération de refroidissement primaire est sélectionnée (S102), augmenter (S104, S106, S108) la capacité du compresseur en ajoutant une capacité prédéterminée à une capacité de fonctionnement du compresseur; et
contrôler (S110, S114, S116) la capacité du compresseur (11) de manière variable en fonction d'une valeur moyenne d'une pression d'évaporation variant pendant une durée prédéterminée.

2. Procédé selon la revendication 1, dans lequel la commande variable de la capacité du compresseur est destinée à contrôler le compresseur de telle sorte que la capacité du compresseur soit augmentée d'une variation minimale de capacité en fonction de la valeur moyenne de la pression d'évaporation pendant la durée prédéterminée.

3. Procédé selon la revendication 1, dans lequel
la commande variable de la capacité du compresseur permet d'augmenter la capacité du compresseur en déterminant une capacité maximale du compresseur sans réduire la capacité du compresseur.

4. Procédé selon la revendication 1, dans lequel, dans l'opération de refroidissement primaire, la capacité des unités intérieures effectuant une opération de refroidissement est supérieure à la capacité des unités intérieures effectuant une opération de chauffage.

5. Climatiseur multiple à chauffage et refroidissement simultanés comprenant:
une unité extérieure (10) ayant un compresseur (11) et un ventilateur extérieur (13A);
une pluralité d'unités intérieures (21, 22, 23, 24) connectées à l'unité extérieure;
une unité de commutation de chauffage et de refroidissement (30) correspondant aux unités intérieures respectives; et
un régulateur (10A) configuré pour déterminer si une opération de refroidissement primaire est sélectionnée ou non, dans lequel la capacité des unités intérieures (21) effectuant une opération de refroidissement est supérieure à la capacité des unités intérieures (22, 23, 24) effectuant une opération de chauffage, et si l'opération de refroidissement primaire est sélectionnée, le régulateur actionnant le ventilateur extérieur (13A) pendant une durée prédéterminée dans un état dans lequel le débit d'air du ventilateur extérieur est fixé à une capacité prédéterminée dépendant de la pression de condensation et déterminer une capacité de régulation du ventilateur extérieur sur la base de la valeur moyenne des pressions de condensation pendant une période prédéterminée, **caractérisé en ce que**
pendant le fonctionnement de refroidissement primaire, le régulateur (10A) est configuré pour augmenter la capacité du compresseur (13A) en ajoutant une capacité prédéterminée à une capacité de fonctionnement du compresseur, et contrôler la capacité du compresseur d'une manière variable selon une valeur moyenne d'une pression d'évaporation variant pendant une durée prédéterminée.

6. Climatiseur d'air multiple selon la revendication 5, dans lequel le régulateur (10A) fait varier une capacité de contrôle variable du ventilateur extérieur (13A) et ce, d'une variation de capacité minimale en fonction de la valeur moyenne de la pression de condensation pendant la durée prédéterminée, afin d'empêcher une variation instantanée de la pression de condensation.

7. Climatiseur d'air multiple selon la revendication 5, dans lequel le régulateur (10A) augmente la puissance du compresseur (13A) d'une variation de puissance minimale en fonction de la valeur moyenne de la pression d'évaporation pendant la durée prédéterminée, afin d'empêcher une modification instantanée de la pression d'évaporation.

8. Climatiseur d'air multiple selon la revendication 5, dans lequel le régulateur (10A) détermine une capacité de compresseur maximale sans réduire la capacité du compresseur, afin d'augmenter la capacité du compresseur.
